# EUROPÄISCHE PATENTSCHRIFT

(11) **EP 1 735 252 B1**
(45) Veröffentlichungstag und Bekanntmachung des Hinweises auf die Patenterteilung: **05.12.2007**
(21) Anmeldenummer: 05731153.2
(22) Anmeldetag: 05.04.2005
(51) Int. Cl.: C04B 7/21, C04B 28/08

(54) **HYDRAULISCHES BINDEMITTEL**
HYDRAULIC BINDER
LIANT HYDRAULIQUE

(30) Priorität: 05.04.2004 AT 5982004
(43) Veröffentlichungstag der Anmeldung: 27.12.2006
(73) Patentinhaber: Holcim Ltd., 8050 Zürich (CH)
(72) Erfinder: KO, Suz-Chung, CH-5600 Lenzburg (CH); KRUSPAN, Peter, CH-4412 Nuglar (CH); GEBAUER, Juraj, CH-5106 Veltheim (CH)
(74) Vertreter: Haffner, Thomas M.
(86) Internationale Anmeldenummer: PCT/IB2005/000878
(87) Internationale Veröffentlichungsnummer: WO 2005/097701

(56) Entgegenhaltungen:
- WO-A-00/00447
- US-A1- 2003 167 972

## Beschreibung

Die Erfindung betrifft ein alkaliaktiviertes hydraulisches Bindemittel enthaltend Schlacken und Aluminiumsilikate.

Die Zusammensetzung und Herstellung von supersulfatiertem Hüttenzement basiert auf der Zugabe von Calciumsulfat zum Zement. Gemäß der Internationalen Normungsorganisation (ISO) ist supersulfatierter Zement als Mischung von mindestens 75 Gew.% zerkleinerter granulierter Hochofenschlacke, großen Zusätzen von Calciumsulfat (> 5 Gew.% SO₃) und maximal 5 Gew.% gelöschtem Kalk, Portlandzementklinker oder Portlandzement definiert.

Zur Herstellung von supersulfatiertem Zement muss die granulierte Schlacke gemäß der deutschen Norm mindestens 13 Gew.% Al₂O₃ enthalten und der Formel (CaO + MgO + Al₂O₃)/SiO₂ > 1,6 entsprechen. Nach Keil wird eine Menge von 15 bis 20 % Tonerdeschlacke mit einem Mindestmodulus von (CaO + CaS + 0,5 MgO + Al₂O₃)/(SiO₂ + MnO) > 1,8 bevorzugt. Gemäß Blondiau muss das CaO/SiO₂-Verhältnis zwischen 1,45 und 1,54 und das Al₂O₃/SiO₂-Verhältnis zwischen 1,8 und 1,9 betragen.

Kalk, Klinker oder Zement wird zugesetzt, um den pH-Wert in der Zementpaste zu erhöhen und die Auflöslichkeit von Tonerderde in der flüssigen Phase während der Hydratisierung des Zements zu erleichtern. Die Härtung von supersulfatiertem Hüttenzement kann ohne chemische Zusätze oder eine spezielle Formungsbehandlung erfolgen.

Die US-5 626 665 offenbart ein Mischpuzzolan zur Verwendung mit Portlandzement zur Herstellung eines zementartigen Systems. Das Mischpuzzolan enthält gebrannten Ton und mindestens einen Bestandteil ausgewählt aus der Gruppe bestehend aus etwa 2% bis etwa 30% Gips, etwa 0% bis etwa 25% hydratisiertem Ofenstaub, etwa 0% bis etwa 20% hydratisiertem Kalk, etwa 0% bis etwa 20% hydratisiertem Kalkofenstaub, etwa 0% bis etwa 50% Flugasche und etwa 0% bis etwa 5% organischem Plastifikator. Der gebrannte Kalk ist in ausreichenden Mengen vorhanden, um ein Mischpuzzolan mit einem Endsummengewicht von 100% zu ergeben. Das Mischpuzzolan wird mit dem Portlandzement in einem Gewichtsverhältnis von etwa 1:20 bis etwa 1:1, vorzugsweise etwa 1:2 bis etwa 1:3, vermischt.

In gewöhnlichen Portlandzementen und Hüttenzementen, bei denen die Hydratisierung in flüssiger Phase frei von in Lösung befindlicher Tonerde stattfindet, ist der Gehalt an Calciumsulfat auf einen niedrigen Prozentsatz beschränkt, um einen eventuellen inneren Zerfall aufgrund der Bildung von Calciumsulfoaluminat (Candlot bacilli) als Folge der nicht in Lösung gegangenen Tonerde zu vermeiden. In diesen Zementen besteht der Haupteinfluss von Calciumsulfat in der Verzögerungswirkung, die es auf die Abbindezeit ausübt. Die Basizität der hydratisierten Calciumaluminate sowie die Unlöslichkeit der in den Aluminaten enthaltenen Tonerde hängt von der Kalkkonzentration in der flüssigen Phase des Zements während der Hydratisierung ab, und zwar unabhängig davon, ob die hydratisierten Calciumaluminate im gehärteten Zement in kristalliner Form oder in amorpher Form vorliegen. Die Kalkkonzentration in der flüssigen Phase bestimmt die Art des Einflusses des Calciumsulfats auf die Abbindezeit des Zements und die maximale Calciumsulfatmenge, die der Zement enthalten kann, ohne dass es zu einem inneren Zerfall durch zeitversetzte Ettringitbildung kommt.

In supersulfatiertem Hüttenzement liegt die Kalkkonzentration in der flüssigen Phase unter der Unlöslichkeitsgrenze der Tonerde. Größere Zugaben von Calciumsulfat zwecks Aktivierung der Reaktionen von Hochofenschlacke bestimmen die Bildung von Tricalciumsulfoaluminat mit hoher hydraulischer Aktivität auf Basis des in Lösung befindlichen Kalks und der in Lösung befindlichen Tonerde, ohne zu einem eventuellen Zerfall zu führen. Die Zugabe von Calciumsulfat zu granulierter Hochofenschlacke erzeugt keinen Expansionszement, sondern wirkt als Beschleunigungsmittel bei der Bildung von hydratisierten Bestandteilen. In supersulfatiertem Zement sind größere Anteile an Calciumsulfat nicht als störend anzusehen. Die Tricalciumsulfoaluminate, zu denen sie führen, tragen vielmehr zu einer Erhöhung der hydraulischen Aktivität bei, anstatt einen Zerfall zu bewirken, wie es bei Portlandzement und normalem Hüttenzement der Fall ist.

Das anfängliche Abbinden und Aushärten von supersulfatiertem Zement geht Hand in Hand mit der Bildung der Hochsulfatform von Calciumsulfoaluminat aus den Schlackenkomponenten und dem zugesetzten Calciumsulfat. Die Zugabe von Portlandzement zu Zement ist zur Einstellung der richtigen Alkalinität erforderlich, damit die Bildung von Ettringit ermöglicht wird. Die wichtigsten Hydratisierungsprodukte sind die Mono- und Trisulfoaluminattobermorit-ähnliche Phase und Tonerde.

Supersulfatierter Zement verbindet sich bei der Hydratisierung mit mehr Wasser als Portlandzement. Er erfüllt alle Normvorschriften von Zement hinsichtlich Mahlfeinheit. Er wird als Zement mit niedrigem Heizwert angesehen. Wie jeder andere Portland- oder Hüttenzement kann er in Form von Beton, Verputzmörtel oder Fugenmörtel verwendet werden. Die bei der Verwendung von supersulfatiertem Zement zu beachtenden Bedingungen sind identisch mit jenen, die bei der Auswahl, der Mischung und dem Auftrag von anderen Zementen maßgebend sind.

Zur Verbesserung von Aluminosilicat-Bindemitteln wurde bereits vorgeschlagen, diese mit Alkali und insbesondere Sodalauge oder Ätzkalilauge zu aktivieren.

Alkali aktivierte Aluminisilicat-Bindemittel (AAAS) sind zementartige Materialien, die durch Umsetzung von feinen Silika- und Tonerdefeststoffen mit einer Alkali- oder Alkalisalzlösung zur Herstellung von Gelen und kristallinen Verbindungen gebildet werden. Die Technologie der Alkaliaktivierung wurde ursprünglich 1930 bis 1940 von Purdon entwickelt, der entdeckt hatte, dass die Zugabe von Alkali zu Schlacke ein rasch härtendes Bindemittel liefert.

Im Gegensatz zu supersulfatiertem Zement kann eine große Vielfalt von Materialien (natürlicher oder gebrannter Ton, Schlacke, Flugasche, Belitschlämme, gemahlener Stein, etc.) als Quelle für Aluminosilicatmaterialien herangezogen werden. Ver-schiedene Alkalilösungen können zur Erzeugung von Härtungsreaktionen verwendet werden (Alkalihydroxid, Silicat, Sulfat und Carbonat, etc.). Das bedeutet, dass die Quellen für AAAS-Bindemitteln nahezu unbegrenzt sind.

Während der Alkaliaktivierung wirkt eine hohe Konzentration von OH-Ionen in der Mischung auf die Aluminosilicate. Während in Portland- oder supersulfatierter Zementpaste aufgrund der Löslichkeit von Calciumhydroxid ein pH > 12 erzeugt wird, liegt der pH-Wert im AAAS-System über 13,5. Die Menge an Alkali, die im Allgemeinen 2 bis 25 Gew.% Alkali (> 3% Na₂O) beträgt, hängt von der Alkalinität der Aluminosilicate ab.

Die Reaktivität eines AAAS-Bindemittels hängt von seiner chemischen und mineralischen Zusammensetzung, dem Verglasungsgrad und der Mahlfeinheit ab. Im Allgemeinen können AAAS-Bindemittel innerhalb von 15 Minuten mit dem Abbinden beginnen und bieten auf lange Sicht eine rasche Aushärtung und einen starken Festigkeitszuwachs. Die Abbindereaktion und der Härtungsprozess sind nach wie vor nicht ganz klar. Sie gehen mit der anfänglichen Auslaugung von Alkali und der Bildung von schwach kristallinen Calciumhydrosilicaten der Tobermoritgruppe vor sich. Calciumaluminosilicate beginnen zu kristallisieren, um zeolitartige Produkte und in der Folge Alkalizeolite zu bilden.

Die Festigkeitswerte im AAAS-System werden dem starken Kristallisationskontakt zwischen Zeoliten und Calciumhydrosilicaten zugeschrieben. Die hydraulische Aktivität wird durch eine Erhöhung der Alkalidosen verbessert. Die Beziehung zwischen der hydraulischen Aktivität und der Alkalimenge sowie der Anwe-senheit von Zeolit in den hydratisierten Produkten hat gezeigt, dass Alkali nicht nur als einfache Katalysatoren wirken, sondern an Reaktionen auf dieselbe Weise wie Kalk und Gips teilnehmen und aufgrund eines starken Kationeneinflusses eine relativ hohe Festigkeit aufweisen.

Es wurde von vielen Studien betreffend die Aktivierung von Silicoaluminatmaterialien mit Alkali und ihren Salzen berichtet.

Aus der WO 00/00448 ist bereits ein aktiviertes Aluminosilikat-Bindemittel bekannt geworden, bei welchem zur Reduktion von hohen Anteilen von Sodalauge oder Kalilauge und zur Verbesserung der Festigkeitswerte als Aktivator Zementofenstaub eingesetzt wurde. Zementofenstaub wurde hiebei in Mengen von 1 bis 20 Gew.% vorgeschlagen. Die Zugabe von Zementofenstaub erhöht aber den Wasserbedarf und erhöht damit das Risiko von Schwindungsrissen.

Die Erfindung zielt nun darauf ab, ein alkaliaktiviertes hydraulisches Bindemittel der eingangs genannten Art zu schaffen, welches sich durch geringere Kalkanteile und verbesserte Frühfestigkeitswerte und einen verringerten Wasser/Zement Faktor auszeichnet, wodurch eine höhere Beständigkeit und eine ver-ringerte Anfälligkeit zur Rißbildung gewährleistet ist.

Zur Lösung dieser Aufgabe besteht das erfindungsgemäße Bindemittel im Wesentlichen darin, dass Schlacke, insbesondere Hochofenschlacke, in Mengen von ≥ 20 Gew.%, von Hochofenschlacke verschiedene Aluminiumsilikate, vorzugsweise Flugasche und natürliche Aluminiumsilikate, vorzugsweise Basalt, Tone, Mergel, Andesite oder Zeolithe, in Mengen von 5 Gew.% bis 75 Gew.% und ein Alkaliaktivator in einer Menge, welche einem Na₂O Equivalent definiert als (Na₂O + 0,658 K₂O) (ASTM C 150) zwischen 0,7 Gew.% und 4 Gew.% entspricht, vorliegen. Überraschender Weise hat sich nun gezeigt, dass bei Verwendung des Alkaliaktivators in den angegebenen Mengen der Anteil an Hochofenschlacke auf bis zu 20 Gew.% abgesenkt werden kann und dennoch entsprechende Frühfestigkeitswerte erzielt werden. Eine derartige Absenkung eines Anteils an Hochofenschlacke gelingt insbesondere bei den bevorzugten Aluminosilikaten, wie beispielsweise Flugasche und natürlichen Aluminiumsilikaten, wie Basalt, wobei gleichzeitig mit dem erfindungsgemäßen Bindemittel der Vorteil erreicht wird, dass der Anteil an CaO in der Mischung wesentlich herabgesetzt werden kann. Die Herabsetzung des CaO-Gehaltes hat zur Folge, dass die CO₂-Entwicklung bei der Produktion eines derartigen Bindemittels wesentlich geringer wird und dass daher die Herstellung umweltfreundlicher wird. Der Ersatz von Hochofenschlacke durch Aluminiumsilikate führt gleichzeitig dazu, dass das Schwindungsverhalten am Beginn des Erhärtungsprozesses wesentlich verbessert wird, wobei der Wasserbedarf reduziert wird und die Alkali-Aggregatreaktivität verringert wird. Alle diese Eigenschaften führen zu einem besonders beständigen und dauerfesten Produkt.

In besonders bevorzugter Weise sind erfindungsgemäß als Alkaliaktivator Alkalihydroxide, -silikate, -karbonate und/oder Sulfate von Na und/oder K eingesetzt. Mit Vorteil kann hiebei der Mischung zusätzlich Kalkstein und/oder Quarze mit der Maßgabe zugesetzt sein, sodass der Al₂O₃-Gehalt der Mischung ≥ 5 Gew.% ist.

Das Schwindungsverhalten und damit die höhere Belastungsbeständigkeit lässt sich insbesondere dadurch verbessern, dass zur Reduktion der Wasser/Zementverhältnisses Plastifizierungsmittel- und/oder Superverflüssiger in Mengen von 0,1 bis 1 Gew.% bezogen auf die Trockensubstanz zugesetzt wird, wobei vorzugsweise zusätzlich als Abbindebeschleuniger Portlandzementklinker in Mengen zwischen 0,1 und 5 Gew.% eingesetzt sind, um entsprechend hohe Frühfestigkeitswerte sicherstellen zu können.

Während üblicher Weise der Zusatz von Portlandzementklinker die Frühfestigkeitswerte verbessert, kann auf einen derartigen Zusatz dann verzichtet werden, wenn der erfindungsgemäße alkaliaktivierte hydraulische Binder einer Wärmebehandlung unterzogen wird. Mit Vorteil wird hiebei ein Bindemittel mit hoher Frühfestigkeit bereitgestellt, welches dadurch ausgezeichnet ist, dass die Mischung bei Temperaturen unter 50°C, vorzugsweise zwischen 40°C und 50°C, über 3 Stunden, vorzugsweise 4 bis 6 Stunden, wärmebehandelt ist. Eine derartige Wärmebehandlung hat überraschender Weise zur Folge, dass auch bei vollständigem Verzicht auf Portlandzementklinker vergleichbare Frühfestigkeitswerte bereits nach einem Tag erreicht werden. Als Aktivator kann in besonders vorteilhafter Weise Wasserglas eingesetzt werden.

Die Erfindung wird nachfolgend anhand von Ausführungsbeispielen näher erläutert.

In Tabelle 1 sind drei Beispiele möglicher Zusammensetzungen des erfindungsgemäßen Bindemittels und die enthaltenen Festigkeitswerte angeführt.

| Beispiel | | 1 | 2 | 3 |
|---|---|---|---|---|
| Hochofenschlacke | % | 69 | 46 | 23 |
| Flugasche | % | 23 | 46 | 69 |
| Na₂SiO₃.5H₂O | % | 6 | 6 | 6 |
| KOH | % | 2 | 2 | 2 |
| Wasser/Zement Faktor | | 0.34 | 0.32 | 0.31 |
| CS 1 Tag | MPa | 22.1 | 21.4 | 12.3 |
| CS 2 Tage | MPa | 28.5 | 28.1 | 20.0 |
| CS 28 Tage | MPa | 55.9 | 54.2 | 37.2 |

Tabelle 2 stellt weitere drei Ausführungsbeispiele vor, aus welchen sich die Verbesserung der Frühfestigkeit durch Zusatz von Portlandzementklinker oder die Temperaturbehandlung ergibt.

| Beispiel | | 1 | 2 | 3 |
|---|---|---|---|---|
| Hochofenschlacke | | 45.5 | 43.0 | 45.5 |
| Basalt | % | 45.5 | 43.0 | 45.5 |
| Na₂SiO₃.5H₂O | % | 9 | 9 | 9 |
| Portlandzementklinker | % | - | 5 | - |
| Temperaturbehandlung | % | normal | normal | 40°C (6h) |
| Wasser/Zement Faktor | | 0.33 | 0.32 | 0.35 |
| CS 1 Tag | MPa | 1.3 | 21.6 | 20.3 |
| CS 2 Tage | MPa | 23.9 | 30.6 | 23.8 |
| CS 28 Tage | MPa | 51.9 | 53.4 | 44.1 |

In Figur 1 ist die Verbesserung des Schwindungsverhaltens über die Zeit durch zumindest teilweisen Ersatz der Hochofenschlacke durch Flugasche ersichtlich.

Figur 2 zeigt die zunehmende Unterdrückung der Alkali-Silika-Reaktivität durch den Ersatz von Hochofenschlacke durch Basalt, wobei OPC Portlandzementklinker und BFS Hochofenschlacke bedeutet. Mit ASR ist die Alkali-Silika-Reaktivität bezeichnet.

## Patentansprüche

1. Alkaliaktiviertes hydraulisches Bindemittel enthaltend Schlacken und Aluminiumsilikate, **dadurch gekennzeichnet, dass** Schlacke, insbesondere Hochofenschlacke, in Mengen von ≥ 20 Gew.%, von Hochofenschlacke verschiedene Aluminiumsilikate, vorzugsweise Flugasche und natürliche Aluminiumsilikate, vorzugsweise Basalt, Tone, Mergel, Andesite oder Zeolithe, in Mengen von 5 Gew.% bis 75 Gew.% und ein Alkaliaktivator in einer Menge, welche einem Na₂O Equivalent definiert als (Na₂O + 0,658 K₂O) (ASTM C 150) zwischen 0,7 Gew.% und 4 Gew.% entspricht, vorliegen.

2. Alkaliaktiviertes hydraulisches Bindemittel nach Anspruch 1, **dadurch gekennzeichnet, dass** als Alkaliaktivator Alkalihydroxide, -silikate, -karbonate und/oder Sulfate von Na und/oder K eingesetzt sind.

3. Alkaliaktiviertes hydraulisches Bindemittel nach Anspruch 1 oder 2, **dadurch gekennzeichnet, dass** die Mischung zusätzlich Kalkstein und/oder Quarze mit der Maßgabe enthält, dass der Al2O3-Gehalt der Mischung ≥ 5 Gew.% ist.

4. Alkaliaktiviertes hydraulisches Bindemittel nach einem der Ansprüche 1, 2 oder 3, **dadurch gekennzeichnet, dass** zur Reduktion der Wasser/Zementverhältnisses Plastifizierungsmittel- und/oder Superverflüssiger in Mengen von 0,1 bis 1 Gew.% bezogen auf die Trockensubstanz zugesetzt sind.

5. Alkaliaktiviertes hydraulisches Bindemittel nach einem der Ansprüche 1 bis 4, **dadurch gekennzeichnet, dass** als Abbindebeschleuniger Portlandzementklinker in Mengen zwischen 0,1 und 5 Gew.% eingesetzt ist.

6. Verfahren zur Herstellung eines alkaliaktivierten hydraulischen Bindemittels nach einem der Ansprüche 1 bis 5, **dadurch gekennzeichnet, dass** die Mischung bei Temperaturen unter 50°C, vorzugsweise zwischen 40°C und 50°C, über 3 Stunden, vorzugsweise 4 bis 6 Stunden, wärmebehandelt wird.

## Claims

1. An alkali-activated hydraulic binder containing slags and aluminum silicates, **characterized in that** it comprises slag, in particular blast furnace slag, in amounts of ≥20% by weight, aluminum silicates different from blast furnace slag, preferably fly ash and natural aluminum silicates, preferably basalt, clays, marl, andesites or zeolites, in amounts of from 5% by weight to 75% by weight, and an alkaline activator in an amount corresponding to an Na₂O equivalent defined as (Na₂O + 0.658 K₂O) (ASTM C 150) of between 0.7% by weight and 4% by weight.

2. An alkali-activated hydraulic binder according to claim 1, **characterized in that** alkali hydroxides, silicates, carbonates and/or sulfates of Na and/or K are used as said alkaline activator.

3. An alkali-activated hydraulic binder according to claim 1 or 2, **characterized in that** the mixture additionally comprises limestone and/or quartzes, with the proviso that the Al₂O₃-content of the mixture is ≥5% by weight.

4. An alkali-activated hydraulic binder according to any one of claims 1, 2 or 3, **characterized in that** plasticizers and/or superliquefiers are added in amounts of from 0.1 to 1% by weight, based on the dry substance, to reduce the water/cement ratio.

5. An alkali-activated hydraulic binder according to any one of claims 1 to 4, **characterized in that** Portland cement clinker is used as a setting accelerator in amounts of between 0.1 and 5% by weight.

6. A method for producing an alkali-activated hydraulic binder according to any one of claims 1 to 5, **characterized in that** the mixture is heat-treated at temperatures of below 50°C, preferably between 40°C and 50°C, for 3 hours, preferably 4 to 6 hours.

## Revendications

1. Liant hydraulique à activation alcaline, contenant des laitiers et des silicates d'aluminium, **caractérisé par** la présence de laitiers, en particulier de laitiers de haut fourneau, en des quantités ≥ 20 % en poids, de silicates d'aluminium différents des laitiers de haut fourneau, de préférence des cendres volantes et des silicates d'aluminium naturels, de préférence du basalte, des argiles, de la marne, des andésites ou des zéolithes, en des quantités de 5 % en poids à 75 % en poids et d'un activateur alcalin en une quantité qui correspond à un équivalent de Na₂O défini en tant que (Na₂O + 0,658 K₂O) (ASTM C 150) entre 0,7 % en poids et 4 % en poids.

2. Liant hydraulique à activation alcaline selon la revendication 1, **caractérisé en ce que** des hydroxydes alcalins, des silicates alcalins, des carbonates alcalins et/ou des sulfates de Na et/ou de K sont utilisés en tant qu'activateur alcalin.

3. Liant hydraulique à activation alcaline selon la revendication 1 ou 2, **caractérisé en ce que** le mélange contient de manière supplémentaire du calcaire et/ou des quartzs sous réserve que la teneur en Al₂O₃ du mélange soit ≥ 5 % en poids.

4. Liant hydraulique à activation alcaline selon l'une quelconque des revendications 1, 2 ou 3, **caractérisé en ce que** des plastifiants et/ou des fluidifiants fortement actifs sont utilisés en des quantités de 0,1 à 1 % en poids par rapport à la substance sèche afin de réduire le rapport eau/ciment.

5. Liant hydraulique à activation alcaline selon l'une quelconque des revendications 1 à 4, **caractérisé en ce que** du clinker de ciment Portland est utilisé en des quantités comprises entre 0,1 et 5 % en poids en tant qu'accélérateur de prise.

6. Procédé de production d'un liant hydraulique à activation alcaline selon l'une quelconque des revendications 1 à 5, **caractérisé en ce que** le mélange est traité thermiquement à des températures inférieures à 50°C, de préférence comprises entre 40°C et 50°C, pendant 3 heures, de préférence pendant 4 à 6 heures.
